# EUROPÄISCHE PATENTSCHRIFT

(11) **EP 3 124 160 B1**
(45) Veröffentlichungstag und Bekanntmachung des Hinweises auf die Patenterteilung: **09.05.2018**
(21) Anmeldenummer: 16181048.6
(22) Anmeldetag: 25.07.2016
(51) Int. Cl.: B23K 11/30, B23K 35/40, B23B 5/16

(54) **ADAPTIVES VERFAHREN ZUM FRÄSEN VON ELEKTRODEN VON PUNKTSCHWEISSVORRICHTUNGEN**
ADAPTIVE METHOD FOR MILLING WELDING GUN ELECTRODES
PROCEDE ADAPTATIF DESTINE AU FRAISAGE DES ELECTRODES DE DISPOSITIFS DE SOUDAGE PAR POINTS

(30) Priorität: 27.07.2015 DE 102015112175
(43) Veröffentlichungstag der Anmeldung: 01.02.2017
(73) Patentinhaber: SVS Schweißtechnik GmbH, 45475 Mülheim (DE)
(72) Erfinder: Schmidt, Harald, 45144 Essen (DE); Wieczorek, Gary, 45739 Oer-Erkenschwick (DE)
(74) Vertreter: Patentanwälte Bauer Vorberg Kayser

(56) Entgegenhaltungen:
- DE-B4-102008 028 385
- DE-U1-202015 103 106

## Beschreibung

Die Erfindung bezieht sich auf ein Verfahren zum Fräsen von Elektroden von Punktschweißvorrichtungen nach dem Oberbegriff des Patentanspruchs 1.

Elektroden von Punktschweißanlagen werden mittels eines Kappenfräsers anfänglich in Form gebracht und anschließend von Zeit zu Zeit wieder aufgefrischt. Punktschweißanlagen mit zugeordnetem Kappenfräser sind üblicherweise entlang einer Montagestrecke für Blechteile angeordnet, bei denen die Punktschweißverbindungen zumeist per Roboter erfolgen. Häufig sind sie in der Automobilproduktion zu finden. In der Regel ist ein Kappenfräser einem Schweißroboter zugeordnet. Schweißroboter haben Schweißzangen, beispielsweise C-Zangen oder X-Zangen.

Während des Betriebes der Punktschweißzangen werden die Punktschweißelektroden abgenutzt. In der Regel haben die Punktschweißelektroden Elektrodenkappen, diese können ausgetauscht werden. Während des Schweißbetriebs tritt eine ständige Veränderung der Elektroden auf. Jedwede geometrische Änderung führt zu einer Veränderung des Schweißergebnisses. Zumeist bilden sich Wülste am Rand der Elektroden, die eine Vergrößerung der tatsächlichen Kontaktfläche bewirken. Teilweise verzundern die Elektroden auch. Häufig nehmen sie Fremdmaterial anderer Art auf. Dies alles führt dazu, dass die Stromwerte sich verändern und das Schweißergebnis nicht gleichbleibend ist.

Nach dem Einsatz einer neuen, frischen Elektrode, insbesondere einer Elektrodenkappe, wird diese durch ein Startfräsen in die gewünschte Form für eine fertige, einsatzbereite Elektrode gebracht. Danach werden Folgefräsungen durchgeführt, um eine abgenutzte Elektrode wieder aufzufrischen. Dieser Vorgang ähnelt dem Anspitzen eines Bleistiftes. Durch die Kappenfräser ist es somit möglich, die Wirkflächen der Elektroden jeweils wieder aufzuarbeiten. Kappenfräser sind beispielsweise aus EP 958 092 B1, US 6,863,597 B2, US 6,666,631 B2, DE 19 825 771 A1 und DE 42 13 571 C2 bekannt.

Typischerweise liegen die Umdrehungszahlen der Fräswerkzeuge von Kappfräsern im Bereich von 270 bis 300 U/min., also etwa 5 U/sek. Ein Folgefräsen ist ein relativ kurzer Vorgang, es genügen beispielsweise 1 bis 2 sek. Abgefräst wird dabei relativ wenig Material, typischerweise unter 0,5 mm, evtl. sogar noch weniger. Typischerweise werden beim Folgefräsen 5 bis 7 Umdrehungen durchgeführt. Es kann nun aber sein, dass bereits nach drei Umdrehungen die Elektrode ausreichend blank ist. Wird das Folgefräsen dann nicht gestoppt, sondern werden noch weitere Umdrehungen durchgeführt, wird unnötig Material abgetragen und muss die Elektrode früher als vielleicht notwendig ausgetauscht werden. Wird beim Folgefräsen allerdings zu wenig abgefräst, ist ein Nachfräsen notwendig, dies benötigt Zeit und Aufwand.

Die Erfindung hat es sich zum Ziel gesetzt, den Vorgang des Folgefräsens möglichst so ablaufen zu lassen, dass zeitlich weder zu kurz noch zu lang gefräst wird, also möglichst wenig Umdrehungen, aber ausreichend viele Umdrehungen des Fräswerkzeugs erfolgen und dadurch die Elektrode ausreichend nachgearbeitet ist.

Aus der DE 10 2008 028 385 B4 ist ein Messverfahren zum Bestimmen einer Eigenschaft, insbesondere eines Stoffwiderstandes oder einer Stoffwiderstandsfunktion wenigstens eines durch Widerstandsschweißen zu verschweißenden Blechs bekannt. Dabei wird ein Prüfstrom über die Elektroden durch das Blech geleitet und erfasst, der Prüfstrom führt nicht zu einem Schweißvorgang.

Aus DE 11 2010 004 153 T5 ist eine Vorrichtung zur Inspektion von Elektroden zum Punktschweißen bekannt. Verwendet wird eine Kamera, mit der die Wirkfläche der Elektrode erfasst wird. Dadurch kann deren Qualität über nachgeschaltete Auswertevorrichtungen abgeschätzt und ermittelt werden.

All dies ist vor dem Hintergrund zu betrachten, dass die Fertigung von Kraftfahrzeugen, insbesondere Karosseriegruppen, ein komplexer Vorgang ist, der möglichst wenig unterbrochen werden soll, weil Betriebsstörungen immer auch Produktionsausfälle bedeuten und zudem viele Nacharbeiten an den geschweißten Produkten nach sich ziehen.

Beim Fräsen des Schweißbereichs der Punktschweißelektroden wird etwas Material abgetragen. Üblicherweise sind dies maximal 1/10 bis höchstens 2/10 mm. Durch das Fräsen ändert sich die Geometrie der Punktschweißelektrode. Es sind nun Schweißzangen mit Punktschweißelektroden bekannt, die nach jedem Fräsvorgang eine Initialisierung bzw. Kontrolle durchführen. Weiterhin wird es gewünscht, gewisse Parameter der Punktschweißzangen zu erfassen, beispielsweise die Schließkraft, mit der die Punktschweißelektroden während des Fräsens zusammengepresst werden, der optische Zustand der Kappe der Punktschweißelektrode, die Form der gefrästen Punktschweißelektrode usw.. Hierfür werden Sensoren eingesetzt, zu den Sensoren gehören beispielsweise eine Kraftmessdose, eine Kamera, ein Lichtsensor, eine Messstation, insbesondere eine optische oder geometrische Messstation, die die Abmessungen optisch oder mechanisch erfasst.

Derjenige Teil der Elektrode bzw. ihrer Elektrodenkappe, der tatsächlich am Schweißvorgang beteiligt ist und mitwirkt, wird als Wirkfläche bzw. Schweißbereich bezeichnet. Er ist es, der mit den zu verschweißenden Stücken irgendwie in Kontakt kommt. Er muss daher möglichst unabhängig von der Anzahl der Schweißvorgänge optimale Qualität zeigen. Er hat z.B. eine Fläche von ca. 6 mm². DE 20 2015 103106 U1 offenbart ein Verfahren zum Fräsen von Punktschweissvorrichtungen, mit folgenden Verfahrensschritten:
Einsetzen einer frischen Elektrode in die Punktschweissvorrichtung,
Zur Verfügungsstellen einer Fräseinrichtung mit Fräswerkzeug und Zusammenbringen von Elektrode und Fräseinrichtung,
Durchführen eines Startfräsens mit s Umdrehungen des Fräswerkzeuges relativ zur Elektrode, wobei s eine vorermittelte Anzahl von Umdrehungen ist, um eine frische, baugleiche Elektrode mittels der Fräseinrichtung in die benötigte Form für die fertige, einsatzbereite Elektrode zu fräsen.
Hiervon ausgehend liegt der Erfindung die Aufgabe zugrunde, das Verfahren zum Fräsen von Elektroden von Punktschweißvorrichtungen so weiterzubilden, dass der Fräsvorgang adaptiv erfolgt, also in Abhängig von der tatsächlichen Abnutzung der Elektrode, dass die Elektrode möglichst optimal ausgenutzt wird, also bei ei einem Fräsvorgang nur eine möglichst geringe Menge an Material abgetragen wird.

Diese Aufgabe wird gelöst durch ein Verfahren zum Fräsen von Elektroden von Punktschweißvorrichtungen gemäß Anspruch 1, insbesondere zum Fräsen von Elektrodenkappen der Elektroden, mit folgenden Verfahrensschritten:
1. Einsetzen einer frischen Elektrode in die Punktschweißvorrichtung,
2. Zur Verfügungsstellen einer Fräseinrichtung mit Fräswerkzeug und Zusammenbringen von Elektrode und Fräseinrichtung,
3. Durchführen eines Startfräsens mit s Umdrehungen des Fräswerkzeuges relativ zur Elektrode, wobei s eine vorermittelte Anzahl von Umdrehungen ist, um eine frische, baugleiche Elektrode mittels der Fräseinrichtung in die benötigte Form für die fertige, einsatzbereite Elektrode zu fräsen,
4. Durchführen einer ersten Kontrolle, bei der die Elektroden der Punktschweißvorrichtung in direkten Kontakt miteinander gebracht werden und eine elektrische Eigenschaft der Kontaktstelle, beispielsweise der über die Kontaktstelle fließende Kontrollstrom, erfasst wird,
5. Durchführen von praktischen Punktschweißvorgängen,
6. Durchführen eines ersten Folgefräsens mit f Umdrehungen, wobei f die Anzahl der Umdrehungen ist, mit der eine frühere, baugleiche Elektrode mittels der Fräseinrichtung in der Regel mit einer Folgefräsung bearbeitet wurde,
7. Durchführen einer zweiten Kontrolle, wie im Schritt 4 und in Abhängigkeit vom erhaltenen Messergebnis,
   a.) wenn das Messergebnis nicht mehr als 10% schlechter ist als das Messergebnis der ersten Kontrolle, Durchführen von weiteren praktischen Punktschweißvorgängen wie im Schritt 5,
   b.) wenn das Messergebnis nicht im Limit des Schrittes 7 a) liegt, Durchführen eines Nachfräsvorgangs.

Bei diesem Verfahren wird das Ergebnis der in Schritt 4 durchgeführten Kontrolle als Referenz benutzt. Es wird davon ausgegangen, dass diese Kontrolle das Ergebnis einer optimal gefrästen Elektrode darstellt. In späteren Fräsvorgängen, nämlich einem Folgefräsen oder eventuell einem Nachfräsen, wird stets nur so viel gefräst, bis das Ergebnis des Schrittes 4, auch Startkontrolle genannt, erreicht ist. Wird während eines Fräsvorgangs zu viel abgefräst, so wird in nachfolgenden Fräsvorgängen die Anzahl der Umdrehungen des Fräswerkzeuges schrittweise reduziert und das Optimum gesucht, bei dem das Ergebnis des Schrittes 4 erreicht wird. Wird während eines Fräsvorgangs zu wenig gefräst, ist ein Nachfräsen erforderlich und wird im nachfolgenden Fräsvorgang die Anzahl der Umdrehungen erhöht. Auf diese Weise pendelt sich das Verfahren in ein Optimum ein, bei dem jeweils nur so viel während einer Folgefräsung abgetragen wird, bestimmt durch die Anzahl der Umdrehungen, wie notwendig ist.

Dieser Wert, der sich für eine bestimmte Elektrode auf Dauer einstellt, wird mit f bezeichnet. Wenn später eine baugleiche Elektrode eingesetzt wird, weil die betrachtete Elektrode verbraucht ist, wird das erste Folgefräsen mit f-Umdrehungen durchgeführt.

Das Startfräsen ist abhängig von der ursprünglichen Gestalt der Elektrode. Durch Versuche muss ermittelt werden, wie viele Umdrehungen das Fräswerkzeug relativ zur Elektrode durchführen muss, um die gewünschte Form für die fertige, einsatzbereite Elektrode zu erhalten. Da das Startfräsen nur einmal für jede Elektrode durchgeführt wird, ist ein Anpassen nur für eine später eingesetzte, baugleiche Elektrode möglich. Hat man einmal einen Wert für das Startfräsen mit s-Umdrehungen ermittelt, der das gewünschte Ergebnis bringt, wird für baugleiche Elektroden in der Folge der Wert s für die Anzahl der Umdrehungen beim Startfräsen verwendet. Erst wenn eine andere Elektrodenform, eine andere Zusammensetzung des Materials der Elektrode usw. verwendet wird, muss ein neuer Wert s für das Startfräsen gefunden werden.

Die Kontrolle gemäß den Schritten 4 und 7 wird so durchgeführt, dass die beiden Elektroden einer Punktschweißvorrichtung unmittelbar in Kontakt miteinander gebracht werden. Sie werden dabei in die Position gebracht, in der sie möglichst achsgleich sind bzw. ihre Schweißbereiche möglichst gut überlappen. Es wird dann eine Spannung, insbesondere sehr kurzzeitig, an die im Kontakt befindlichen Elektroden angelegt und der im Stromkreis fließende Strom I erfasst. Er liegt typischerweise im Bereich von 100 bis 1.000 A. Seine Höhe wird im Wesentlichen durch die in Berührung befindlichen Schweißbereiche der beiden Elektroden bestimmt. Die Elektroden werden mit einer Kraft gegeneinander gepresst, die typischerweise eine Größe hat, wie sie auch bei tatsächlichen Punktschweißvorgängen benutzt wird. Die Kraft während einer Kontrolle kann im Bereich von +/- 50 %, eventuell auch +/- 80 % der Kraft liegen, die während einer normalen Punktschweißung zwischen den Elektroden vorliegt.

Wenn mit einer frischen, gemäß Schritt 4 kontrollierten Elektrode erstmals praktische Punktschweißvorgänge durchgeführt werden, ändern sich die Elektroden, insbesondere ihre Schweißbereiche. Nach einer gewissen Anzahl von Punktschweißvorgängen muss wieder ein Fräsvorgang erfolgen, diesmal ein erstes Folgefräsen. Die dabei erreichte Qualität der Elektroden wird nun im Schritt 7 mit dem Ergebnis des Schrittes 4 verglichen. Liegt das Ergebnis innerhalb eines gewissen Toleranzbereiches von beispielsweise 3 % des Ergebnisses gemäß Schritt 4, wird das Folgefräsen als ausreichend betrachtet und wird eine weitere Folge von Punktschweißungen durchgeführt. Ist die Abweichung jedoch zu groß, wird ein Nachfräsen durchgeführt.

Allgemein ist davon auszugehen, dass das Ergebnis der Startkontrolle gemäß Schritt 4 ein optimales Ergebnis ist, das in späteren Fräsvorgängen allenfalls erreicht werden kann aber nicht übertroffen wird. Dennoch kann es vorkommen, dass das Ergebnis der Startkontrolle übertroffen wird, also eine höhere Leitfähigkeit zwischen den Elektroden gemessen wird als nach dem Startfräsen. Dies kann z. B. an erhöhter Temperatur der Elektrode und an anderen Umständen liegen. Allgemein wird zwar der Widerstand eines Metalls mit steigender Temperatur geringer, es gibt jedoch Ausnahmen. Ein besseres Messergebnis als in Schritt 4 ist unkritisch und führt nicht zu weiteren Maßnahmen innerhalb des hier beschriebenen Verfahrens.

Wenn ein Nachfräsvorgang erforderlich ist, wird er mit möglichst wenigen Umdrehungen durchgeführt. Da bereits ein Folgefräsen vorangegangen ist, wird möglichst wenig nachgefräst, beispielsweise nur eine Umdrehung. Eventuell können zwei oder drei Umdrehungen durchgeführt werden. Es kann sein, dass mehrere Nachfräsungen hintereinander durchgeführt werden müssen. Bei einer anschließenden, nach einer Folge von Punktschweißungen durchgeführten Folgefräsung kann dann die Summe aus den Umdrehungen des vorangegangenen Folgefräsens zuzüglich der Umdrehungen bei dem mindestens einen Nachfräsvorgang verwendet werden. Es ist das Ziel des Verfahrens, dass möglichst wenig Nachfräsvorgänge für eine Elektrodenkappe durchgeführt werden. Ein Nachfräsvorgang erfordert zusätzliche Zeit.

Es ist vorteilhaft, die Anzahl der Fräsumdrehungen für eine konkrete Elektrode aufzusummieren. Auf diese Weise hat man einen Hinweis darauf, wann ein Austausch der Elektrode ansteht. Ein Hinweis darauf, wann eine Elektrode ausgetauscht werden sollte, kann auch durch das Verfahren gemäß Anspruch 3 erhalten werden. Wenn in mindestens zwei aufeinanderfolgenden, insbesondere mindestens drei aufeinanderfolgenden Schritten 6 jeweils ein Nachfräsen erforderlich wurde, obwohl die Folgefräsungen mit einer höheren Anzahl von Umdrehungen durchgeführt wurden, ist ein Austausch gegen eine baugleiche Elektrode angebracht.

Es ist möglich, dass auch unmittelbar nach Durchführen von praktischen Punktschweißvorgängen eine Kontrolle wie im Schritt 4 durchgeführt wird. Diese Kontrolle liefert dann einen Hinweis darauf, wie stark sich die Elektrode durch die Punktschweißvorgänge verschlechtert hat. Anhand dieses Ergebnisses kann man das anschließende Folgefräsen vorgeben. Je schlechter die Leitfähigkeit ist, je schlechter also das Ergebnis der Kontrolle ist, umso mehr Umdrehungen des Fräswerkzeuges werden für das nachfolgende Folgefräsen eingesetzt.

Eine derartige Kontrolle nach Durchführen von Punktschweißvorgängen kann aber auch verwendet werden, um zu bestimmen, ob möglicherweise die Anzahl der Punktschweißvorgänge erhöht oder erniedrigt werden kann. Wenn nämlich die Abweichung des Ergebnisses der Kontrolle unmittelbar nach einer Folge von Punktschweißvorgängen innerhalb einer gewissen Bandbreite, nämlich das Ergebnis gemäß Schritt 4 zuzüglich einer Zugabe von beispielsweise 20 % liegt, kann man die Anzahl der Punktschweißvorgänge des anschließenden Schweißens erhöhen oder erniedrigen. Hat die Anzahl bisher p betragen, kann sie nun auf p+1 gesetzt werden oder p-1 und dergleichen.

Das Verfahren wird nun anhand von konkreteren Ausführungsbeispielen näher erläutert. Diese sind nicht einschränkend zu verstehen. In der Zeichnung zeigen:
Figur 1: ein Diagramm über der Zeit t in Sekunden für die Anzahl der Umdrehungen von Fräsvorgängen, welche durch vertikale Balken dargestellt sind, und Ablauf des Verfahrens,
Figur 2: ein prinzipielles Schaltbild für das Durchführen der Kontrolle und
Figur 3: ein Diagramm ähnlich Figur 1, jedoch nun mit einem anderen Verfahrensablauf.

Die Kontrolle kann beliebig durchgeführt werden, sofern sie nur das Ergebnis hat, dass die Leitfähigkeit zwischen den in unmittelbarem Kontakt befindlichen Schweißbereichen der beiden Elektroden direkt oder indirekt erfasst wird. So kann beispielsweise bei einer vorgegebenen Spannung der erreichte Stromwert erfasst werden. Es kann der Spannungsabfall über den in Kontakt befindlichen Elektroden ermittelt werden. Es kann eine Ohm-Messung durchgeführt werden. Als Spannung U kann Gleich- oder Wechselspannung verwendet werden. Vorzugsweise werden Spannungspulse benutzt, sodass ein separater Schalter nicht erforderlich ist.

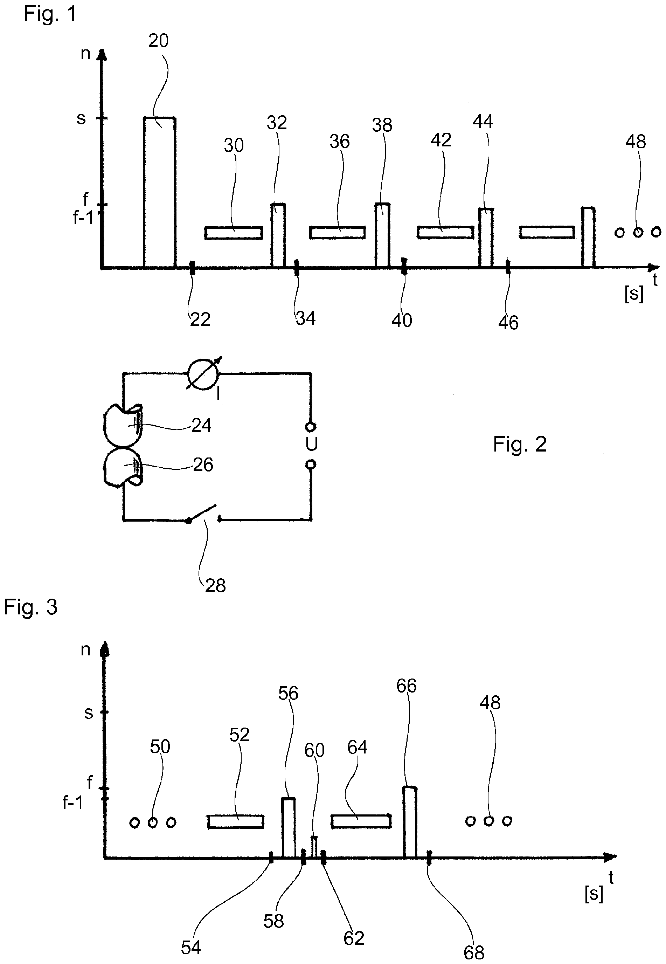

Figur 1 zeigt den Ablauf für eine frisch eingesetzte Elektrode. Es wird dabei davon ausgegangen, dass bereits identische Schweißaufgaben mit baugleichen Elektroden zuvor erledigt wurden, sodass ein Richtwert dafür, wie viele Umdrehungen s für das Startfräsen und wie viele Umdrehungen f des Fräswerkzeuges für ein normales Folgefräsen erforderlich sind. Insoweit zeigt Figur 1 den Ablauf, wie er in einem normalen Produktionsbetrieb anfällt.

Eine neue Elektrode ist in eine an sich bekannte, nach dem Stand der Technik ausgebildete Punktschweißvorrichtung eingesetzt worden. Sie wird erstmals dadurch behandelt, dass ein Startfräsen 20 durchgeführt wird. Dabei werden s-Umdrehungen des Fräswerkzeuges durchgeführt. Der Wert s ist eine vorermittelte Anzahl von Umdrehungen, mit denen zuvor eine frische, baugleiche Elektrode in die gewünschte Form gebracht wurde. Anschließend wird eine erste Kontrolle, auch Startkontrolle genannt, in einer Anordnung, wie sie beispielsweise Figur 2 zeigt, durchgeführt. Unabhängig vom verwendeten Messverfahren werden zwei Elektroden 24, 26 in unmittelbaren Kontakt gebracht, dies mit einer Kontaktkraft, wie sie auch bei praktischen Schweißvorgängen vorliegt. Im hier gezeigten Messverfahren wird eine Spannung U angelegt, die kurzzeitig einen Strom I durch die Elektroden 24, 26 bewirkt. Hierzu kann ein Schalter 28 im Stromkreis vorgesehen sein, der kurzzeitig geschlossen wird, beispielsweise für Millisekunden. Der durch die Elektroden 24, 26 fließende Strom I ist kleiner als der Strom, der bei praktischen Punktschweißvorgängen durch die Elektroden 24, 26 fließt, beispielsweise beträgt er 2 bis 40 % des regulären Schweißstroms. Das Ergebnis der ersten Kontrolle ist ein Messwert, der die Leitfähigkeit der in Kontakt befindlichen Schweißbereiche der Elektroden 24, 26 kennzeichnet, beispielsweise wird unmittelbar die Leitfähigkeit erfasst, oder es werden Stromwerte oder Spannungswerte erfasst. Die Leitfähigkeit ist reziprok zum Widerstand, der Widerstand hängt über das Ohmsche Gesetz mit Strom und Spannung zusammen.

Anschließend an die Startkontrolle 22 werden praktische Punktschweißvorgänge durchgeführt, mit 30 ist eine erste Folge von Schweißvorgängen angedeutet.

Nach Abschluss wird ein erstes Folgefräsen 32 durchgeführt. Hierbei wird das Fräswerkzeug f-mal gedreht. Dabei ist f die Anzahl der Umdrehungen, mit denen eine frühere, baugleiche Elektrode mittels der selben (oder einer baugleichen) Fräseinrichtung in der Regel mit einer Folgefräsung bearbeitet wurde.

Das Ergebnis des ersten Folgefräsens 32 wird in einer zweiten Kontrolle 34 elektrisch überprüft. Im Ausführungsbeispiel nach Figur 1 wird davon ausgegangen, dass das Messergebnis nicht mehr als 3 % schlechter ist als das Messergebnis der ersten Kontrolle 22. In diesem Fall kann eine weitere Folge bzw. Reihe 36 von Schweißvorgängen durchgeführt werden, beispielsweise wie die zweite Folge 30 mit p einzelnen Punktschweißvorgängen. Es folgt nun ein zweites Folgefräsen 38, das wie das erste Folgefräsen 32 durchgeführt wird. Es folgt eine dritte Kontrolle 40, die wie die zweite Kontrolle 34 durchgeführt wird. Auch hier wird davon ausgegangen, dass das Ergebnis gemäß Schritt 7 positiv ist und sich unmittelbar eine weitere Reihe von Schweißvorgängen 42 anschließen kann.

Es wird nun wiederum ein Folgefräsen, nämlich das dritte Folgefräsen 44 durchgeführt. Hier wird nun aber die Anzahl der Umdrehungen von f auf f-1 reduziert, nachdem in den beiden vorausgegangenen Folgefräsungen 32 und 38 jeweils ein so guter Wert des Messergebnisses erhalten wurde, dass die Möglichkeit besteht, dass die beiden Folgefräsungen 32 und 38 mit etwas zu vielen Umdrehungen durchgeführt wurden. Demgemäß wird das dritte Folgefräsen 44 nun mit reduzierter Anzahl der Umdrehungen durchgeführt und anschließend in einer vierten Kontrolle 46 geprüft, ob mit der verringerten Anzahl eine ausreichend blanke Elektrode erhalten wird. Ist dies der Fall, wird zumindest einmal weiter mit der Anzahl f-1 gearbeitet und eventuell später auf f-2 reduziert. Ist dies jedoch nicht der Fall, wird in einem nachfolgenden Folgefräsen wieder auf f erhöht. Die Punkte 48 sollen anzeigen, dass die in Figur 1 betrachtete Elektrode noch weiter genutzt wird.

Im Verfahren nach Figur 3 werden einige weitere Schritte durchgeführt, die im Verfahren nach Figur 1 nicht ersichtlich sind. Die Punkte 50 deuten an, dass nicht eine frische Elektrode eingesetzt wurde, sondern das Startfräsen bereits durchgeführt wurde. Es wird ein Ausschnitt aus dem Leben einer Elektrode dargestellt. Dieser beginnt mit einer Reihe 52 von praktischen Punktschweißvorgängen. Im Unterschied zu dem Verfahren nach Figur 1 schließt sich jedoch nun eine Kontrolle 54 der benutzten Elektrode an, also im Unterschied zu Figur 1 wird nun nicht gleich gefräst, sondern die schlechte Elektrode kontrolliert. Dies ermöglicht es, über den Zustand der Elektrode Kenntnis zu erlangen. Man kann beispielsweise eine nachfolgende Reihe von Punktschweißvorgängen so durchführen, dass die Anzahl nun größer oder kleiner ist.

An die Kontrolle 54 schließt sich ein Folgefräsen 56 an, es wird gefolgt von einer Kontrolle 58 entsprechend den Kontrollen 34, 40, 46 gemäß Figur 1. Hier wird nun davon ausgegangen, dass diese Kontrolle 58 ein Messergebnis liefert, dass nicht innerhalb des Bereiches von Schritt 7a liegt, sodass Schritt 7b durchgeführt werden muss, nämlich ein Nachfräsen 60. Dieses ist im Vergleich zum Folgefräsen 56 relativ kurz, es wird beispielsweise nur eine Umdrehung durchgeführt. In einer anschließenden Kontrolle 46 wird nun festgestellt, ob das Messergebnis gemäß Schritt 7a erreicht ist. Es wird hier davon ausgegangen, dass dies der Fall ist, es folgt eine weitere Reihe 64 von Punktschweißvorgängen. Es schließt sich nun ein weiteres Folgefräsen 66 an, dies aber mit f+1 Umdrehungen. Wobei f die Anzahl der Umdrehungen beim Folgefräsen 56 ist. Dem Folgefräsen 66 folgt wieder eine Kontrolle 68.

### Bezugszeichenliste

- 20: Startfräser
- 22: 1. Kontrolle, Startkontrolle
- 24: Elektrode
- 26: Elektrode
- 28: Schalter
- 30: 1. Reihe Schweißvorgänge
- 32: 1. Folgefräsen
- 34: 2. Kontrolle
- 36: 2. Reihe von Schweißvorgängen
- 38: 2. Folgefräsen
- 40: 3. Kontrolle
- 42: 3. Reihe von Schweißvorgängen
- 44: 3. Folgefräsen
- 46: 4. Kontrolle
- 48: Punkte
- 50: Punkte
- 52: Reihe von Punktschweißvorgängen
- 54: Kontrolle der benutzten Elektrode
- 56: Folgefräsen
- 58: Kontrolle
- 60: Nachfräsen
- 62: Kontrolle
- 64: Reihe
- 66: Folgefräsen
- 68: Kontrolle

- U: Spannung
- I: Strom

## Patentansprüche

1. Verfahren zum Fräsen von Elektroden (24, 26) von Punktschweißvorrichtungen, insbesondere zum Fräsen von Elektrodenkappen der Elektroden (24, 26), mit folgenden Verfahrensschritten:
1. Einsetzen einer frischen Elektrode (24, 26) in die Punktschweißvorrichtung,
2. Zur Verfügungsstellen einer Fräseinrichtung mit Fräswerkzeug und Zusammenbringen von Elektrode (24, 26) und Fräseinrichtung,
3. Durchführen eines Startfräsens (20) mit s Umdrehungen des Fräswerkzeuges relativ zur Elektrode (24, 26), wobei s eine vorermittelte Anzahl von Umdrehungen ist, um eine frische, baugleiche Elektrode (24, 26) mittels der Fräseinrichtung in die benötigte Form für die fertige, einsatzbereite Elektrode (24, 26) zu fräsen,
4. Durchführen einer ersten Kontrolle (22), bei der die Elektroden (24, 26) der Punktschweißvorrichtung in direkten Kontakt miteinander gebracht werden und eine elektrische Eigenschaft der Kontaktstelle, beispielsweise der über die Kontaktstelle fließende Kontrollstrom, erfasst wird, **dadurch gekennzeichnet, dass** das Verfahren zudem die folgenden Verfahrensschritte enthält,
5. Durchführen von praktischen Punktschweißvorgängen (30),
6. Durchführen eines ersten Folgefräsens (32) mit f Umdrehungen, wobei f die Anzahl der Umdrehungen ist, mit der eine frühere, baugleiche Elektrode (24, 26) mittels der Fräseinrichtung in der Regel mit einer Folgefräsung bearbeitet wurde,
7. Durchführen einer zweiten Kontrolle (34), wie im Schritt 4 und in Abhängigkeit vom erhaltenen Messergebnis,
a.) wenn das Messergebnis nicht mehr als 10% schlechter ist als das Messergebnis der ersten Kontrolle (22), Durchführen von weiteren praktischen Punktschweißvorgängen (36) wie im Schritt 5,
b.) wenn das Messergebnis nicht im Limit des Schrittes 7 a) liegt, Durchführen eines Nachfräsvorgangs (60).

2. Verfahren nach Anspruch 1, **dadurch gekennzeichnet, dass** i) der Nachfräsvorgang (60) mit mindestens einer, allgemein y Umdrehungen durchgeführt wird und ii) Durchführen einer weiteren Kontrolle (62) wie im Schritt 4 und iii) in Abhängigkeit vom erhaltenen Messergebnis,
a.) für den Fall, das Messergebnis gemäß Schritt 7 a.) nicht erreicht ist, weiteres Nachfräsen mit mindestens einer Umdrehung und Durchführen einer erneuten weiteren Kontrolle (58) und, wenn das Messergebnis gemäß Schritt 7 a.) erreicht ist, Durchführen von weiteren praktischen Punktschweißvorgängen (64) wie im Schritt 5, ansonsten Wiederholung dieses Schrittes a.),
b.) für den Fall, das Messergebnis gemäß Schritt 7 a.) erreicht ist, Durchführen von weiteren praktischen Punktschweißvorgängen (64) wie im Schritt 5.

3. Verfahren nach Anspruch 1 oder 2, **dadurch gekennzeichnet, dass** dann, wenn bei mindestens zwei aufeinanderfolgenden, insbesondere mindestens drei aufeinanderfolgenden Schritten 6 für ein Folgefräsen (32, 38) und Durchführen des Schrittes 7 jeweils das Ergebnis von Schritt 7 a) erhalten wurde, Austausch der Elektrode (24, 26) gegen eine baugleiche, frische und Start mit Schritt 1.

4. Verfahren nach einem der Ansprüche 1 bis 3, **dadurch gekennzeichnet, dass** dann, wenn nach mindestens einem Folgefräsen (32, 38) mit f Umdrehungen, vorzugsweise nach mindestens zwei aufeinanderfolgenden Folgefräsungen (32, 38) mit f Umdrehungen ein Messergebnis gemäß Schritt 7 a) erreicht wird, ein nachfolgendes Folgefräsen mit zumindest einer Umdrehung weniger als f durchgeführt wird.

5. Verfahren nach einem der Ansprüche 1 bis 3, **dadurch gekennzeichnet, dass** dann, wenn nach mindestens einem Folgefräsen (32, 38) mit f Umdrehungen, vorzugsweise nach mindestens zwei aufeinanderfolgenden Folgefräsungen (32, 38) mit f Umdrehungen ein Messergebnis gemäß Schritt 7 b) erreicht wird und ein Nachfräsen (60) durchgeführt wurde, ein nachfolgendes Folgefräsen mit zumindest f plus 1 Umdrehungen durchgeführt wird.

6. Verfahren nach einem der Ansprüche 1 bis 5, **dadurch gekennzeichnet, dass** nach dem Durchführen von praktischen Punktschweißvorgängen gemäß Schritt 5 und vor einem Folgefräsen (32, 38) eine weitere Kontrolle wie im Schritt 4 durchgeführt wird und in Abhängigkeit vom erhaltenen Messergebnis,
a.) wenn das Messergebnis nicht mehr als 10% schlechter ist als das Messergebnis der ersten Kontrolle, Durchführen von weiteren praktischen Punktschweißvorgängen wie im Schritt 5
b.) wenn das Messergebnis nicht im Limit des Schrittes 7 a) liegt, Durchführen eines Folgefräsvorgangs.

7. Verfahren nach einem der vorangegangenen Ansprüche, **gekennzeichnet durch** mehrfaches Wiederholen der Schritte 5 bis 7.

8. Verfahren nach Anspruch 1, **dadurch gekennzeichnet, dass** zwischen Schritt 5 und 6 und/oder vor Schritt 8 eine weitere Kontrolle (54) analog Schritt 4 durchgeführt wird und in Abhängigkeit vom Messergebnis, wenn das Messergebnis besser ist als das Ergebnis von Schritt 4 zuzüglich einer Zugabe "Z" von maximal z. B. 30% , insbesondere maximal 20%, Erhöhen der Anzahl der Punktschweißvorgänge beim nächsten Punktschweißen und "p" auf "p+1".

9. Verfahren nach Anspruch 1, **dadurch gekennzeichnet, dass** im Schritt 7 a.) ein Durchführen von weiteren praktischen Schweißvorgängen (36) wie im Schritt 5 erfolgt, wenn das Messergebnis nicht mehr als 5% schlechter ist als das Messergebnis der ersten Kontrolle (22).

10. Verfahren nach Anspruch 1, **dadurch gekennzeichnet, dass** im Schritt 7 a.) ein Durchführen von weiteren praktischen Schweißvorgängen (36) wie im Schritt 5 erfolgt, wenn das Messergebnis nicht mehr als 3% schlechter ist als das Messergebnis der ersten Kontrolle (22).

11. Verfahren nach Anspruch 6, **dadurch gekennzeichnet, dass** im Schritt a.) ein Durchführen von weiteren praktischen Schweißvorgängen (36) wie im Schritt 5 erfolgt, wenn das Messergebnis nicht mehr als 5% schlechter ist als das Messergebnis der ersten Kontrolle (22).

12. Verfahren nach Anspruch 6, **dadurch gekennzeichnet, dass** im Schritt a.) ein Durchführen von weiteren praktischen Schweißvorgängen (36) wie im Schritt 5 erfolgt, wenn das Messergebnis nicht mehr als 3% schlechter ist als das Messergebnis der ersten Kontrolle (22).

## Claims

1. A method of milling electrodes (24, 26) of spot-welding devices, especially for milling electrode caps of the electrodes (24, 26), comprising the steps of:
1. introducing a fresh electrode (24, 26) into the spot-welding device;
2. providing a milling device with a milling tool and contacting the electrodes (24, 26) and the milling device;
3. performing initial milling (20) with s revolutions of the milling tool in relation to the electrode (24, 26), wherein s is a predetermined number of revolutions required for milling a fresh electrode (24, 26) identical in construction to the shape required of the final ready-to-operate electrode (24, 26) by way of the milling device;
4. performing a first control (22), wherein the electrodes (24, 26) of the spot-welding device are brought into direct contact with each other, and an electric property of the contact point will be determined, for example the contact current flowing across the contact point, **characterized in that** the method furthermore comprises the following steps:
5. performing practical spot-welding processes (30);
6. performing a first follow-up milling procedure (32) with f revolutions, wherein f is the number of revolutions, with which a preceding electrode (24, 26) identical in construction has been treated by way of the milling device, generally with a follow-up milling procedure;
7. Performing a second control (34), such as in step 4, and depending on the measuring result,
a.) if the measuring result is not more than 10% worse than the measuring result of the first control (22), performing further spot-welding processes (36) such as in step 5,
b.) if the measuring result is not within the limits of the step 7 a), performing a post-milling process (60).

2. The method according to Claim 1, **characterized in that** i) the post-milling process (60) is performed with at least one, generally y revolutions, and ii) performing a further control (62), such as in step 4 and iii) depending on the measuring result obtained,
a.) in the case, where the measuring result according to step 7 a.) will not be obtained, continued post-milling with at least one revolution and performing additional other control (58) and, if the measuring result according to step 7 a.) is obtained, performing additional practical spot-welding processes (64), such as in step 5, otherwise repeating this step a.),
b. in the case, where the measuring result according to step 7 a.) is obtained, performing additional practical spot-welding processes (64) such as in step 5.

3. The method according to Claim 1 or 2, **characterized in that**, if in at least two, especially at least three successive steps 6 of follow-up milling (32, 38) and if performing of step 7, each time the result of step 7 a) has been obtained, substitution of the electrode (24, 26) with a fresh electrode of identical construction, and starting with step 1.

4. The method according to one of the Claims 1 to 3, **characterized in that**, if after at least one follow-up milling (32, 38) with f revolutions, preferably after at least two successive follow-up millings (32, 38) with f revolutions, a measuring result according to step 7 a) is obtained, successive follow-up milling with at least one revolution less than f is performed.

5. The method according to one of the Claims 1 a 3, **characterized in that**, if after at least one follow-up milling (32, 38) with f revolutions, preferably after at least two successive follow-up millings (32, 38) with f revolutions, a measuring result according to step 7 b) is obtained, and post-milling (60) has been performed, successive post-milling with at least f plus 1 revolutions will be performed.

6. The method according to one of the Claims 1 a 5, **characterized in that** after performing practical spot-welding processes according to step 5 and before follow-up milling (32, 38), another control is performed, such as in step 4, and depending on the measuring result obtained,
a.) if the measuring result is not more than 10% worse than the measuring result of the first control, performing further practical spot-welding processes, such as in step 5
b.) if the measuring result is not within the limit of step 7 a), performing follow-up milling.

7. The method according to one of the preceding Claims, **characterized in that** the steps 5 to 7 will be repeated for several times.

8. The method according to Claim 1, **characterized in that** between step 5 and 6 and/or before step 8 another control (54) analogous to that of step 4 is performed, and depending on the measuring result, if the measuring result is better than the result of step 4, plus an addition of "Z" of e.g. 30% as a maximum, especially 20% as a maximum, increasing the number of spot-welding processes in the successive spot-welding procedure, and increasing "p" to "p+1".

9. The method according to Claim 1, **characterized in that** in step 7 a.) performing other practical welding processes (36), such as in step 5, is done if the measuring result is not more than 5% worse than the measuring result of the first control (22).

10. The method according to Claim 1, **characterized in that** in step 7 a.) performing other practical welding processes (36), such as in step 5, is done if the measuring result is not more than 3% worse than the measuring result of the first control (22).

11. The method according to Claim 6, **characterized in that** in step a.) performing other practical welding processes (36) such as in step 5, is done if the measuring result is not more than 5% worse than measuring result of the first control (22).

12. The method according to Claim 6, **characterized in that** in step a.) performing other practical welding processes (36) such as in step 5, is done if the measuring result is not more than 3% worse than measuring result of the first control (22).

## Revendications

1. Procédé pour le fraisage des électrodes (24, 26) des dispositifs de soudage par points, particulièrement pour le fraisage de capuchons d'électrode des électrodes (24, 26), ayant les étapes suivantes consistant à:
1. introduire une électrode fraiche (24, 26) dans le dispositif de soudage par points,
2. fournir un dispositif de fraisage avec outil de fraisage et contacter les électrodes (24, 26) et le dispositif de fraisage,
3. mettre en oeuvre un fraisage de démarrage (20) avec s tours de l'outil de fraisage en relation à l'électrode (24, 26), dans lequel s est un nombre prédéterminé de tours requis afin de fraiser une électrode (24, 26) fraiche, à construction identique, à la forme nécessaire pour l'électrode (24, 26) prête et opérationnelle, moyennant du dispositif de fraisage,
4. mettre en oeuvre un premier contrôle (22), dans lequel les électrodes (24, 26) du dispositif de soudage par points sont mises en contact directe l'une de l'autre, et une propriété électrique du point de contact sera déterminée, par exemple le courant de contact circulant à travers le point de contact, **caractérisé par le fait que** le procédé en outre comprend les étapes suivantes, consistant à
5. mettre en oeuvre des processus pratiques de soudage par points (30),
6. mettre en oeuvre un premier fraisage de suite (32) avec f tours, dans lequel f est le nombre des tours, avec lequel une électrode (24, 26) précédente à construction identique a été traitée moyennant du dispositif de fraisage, en général par un fraisage de suite,
7. mettre en oeuvre un second contrôle (34), tel que dans l'étape 4 et en fonction du résultat de mesure,
a.) lorsque le résultat de mesure n'est pas plus de 10% inférieur au résultat de mesure du premier contrôle (22), mettre en oeuvre d'autres processus de soudage par points (36) tel que dans l'étape 5,
b.) lorsque le résultat de mesure ne se situe pas dans le limite de l'étape 7 a), mettre en oeuvre d'un processus de post-fraisage (60).

2. Procédé selon la revendication 1, **caractérisé par le fait que** i) le processus de post-fraisage (60) est mis en oeuvre avec au moins une, en générale y tours, et ii) mettre en oeuvre un autre contrôle (62) tel que dans l'étape 4 et iii) en fonction du résultat de mesure obtenu,
a.) au cas où le résultat de mesure selon l'étape 7 a.) n'est pas atteint, fraisage de suite continu avec au moins une tour, et mettre en oeuvre encore un autre contrôle (58) et, lorsque le résultat de mesure selon l'étape 7 a.) est atteint, mettre en oeuvre des processus de soudage par points pratiques supplémentaires (64), tel que dans l'étape 5, sinon répéter cet étape a.),
b. au cas où le résultat de mesure selon l'étape 7 a.) est atteint, des processus de soudage par points pratiques supplémentaires (64), tel que dans l'étape 5.

3. Procédé selon la revendication 1 ou 2, **caractérisé par le fait que**, lorsque chez au moins deux, particulièrement au moins trois étapes 6 successives pour un fraisage de suite (32, 38) et lorsque la mise en oeuvre de l'étape 7, chaque fois le résultat de l'étape 7 a) a été obtenu, substitution de l'électrode (24, 26) pour une électrode fraiche, à construction identique, et démarrage avec l'étape 1 est faite.

4. Procédé selon l'une des revendications 1 à 3, **caractérisé par le fait que**, lorsque après au moins un fraisage de suite (32, 38) avec f tours, préférablement après au moins deux fraisages de suite successifs (32, 38) avec f tours, un résultat de mesure selon l'étape 7 a) est atteint, un fraisage de suite successif avec au moins une tour moins que f est mis en oeuvre.

5. Procédé selon l'une des revendications 1 à 3, **caractérisé par le fait que**, lorsque après au moins un fraisage de suite (32, 38) avec f tours, préférablement après au moins deux fraisages de suite (32, 38) successifs avec f tours, un résultat de mesure selon l'étape 7 b) est atteint, et un fraisage de suite (60) a été mis en oeuvre, un post-fraisage successif avec au moins f plus 1 tours sera mis en oeuvre.

6. Procédé selon l'une des revendications 1 à 5, **caractérisé par le fait qu'**après la mise en oeuvre de processus de soudage par points pratiques selon l'étape 5 et avant un fraisage de suite (32, 38), un contrôle supplémentaire est mis en oeuvre, tel que dans l'étape 4, et en fonction du résultat de mesure obtenu,
a.) lorsque le résultat de mesure n'est pas plus de 10% inférieur au résultat de mesure du premier contrôle, la mise en oeuvre d'autres processus de soudage par points pratiques est fait, tel que dans l'étape 5,
b.) lorsque le résultat de mesure ne se situe pas dans le limite de l'étape 7 a), la mise en oeuvre d'un processus de fraisage de suite est fait.

7. Procédé selon l'une des revendications précédentes, **caractérisé par le fait que** les étapes 5 à 7 sont répétées plusieurs fois.

8. Procédé selon la revendication 1, **caractérisé par le fait qu'**entre l'étape 5 et 6 et/ou avant l'étape 8 un autre contrôle (54) analogue à celui de l'étape 4 est mis en oeuvre, et en fonction du résultat de mesure, lorsque le résultat de mesure est supérieure au résultat de l'étape 4, plus une addition "Z" de p. ex. 30% au maximum, particulièrement 20% au maximum, l'étape de faire augmenter le nombre de processus des processus de soudage par points chez le soudage par points prochain et de faire augmenter "p" à "p+1" est mis en oeuvre.

9. Procédé selon la revendication 1, **caractérisé par le fait que** dans l'étape 7 a.) une mise en oeuvre d'autres processus de soudage pratiques (36), tel que dans l'étape 5, est faite, lorsque le résultat de mesure n'est pas plus de 5% inférieur au résultat de mesure du premier contrôle (22).

10. Procédé selon la revendication 1, **caractérisé par le fait que** dans l'étape 7 a.) une mise en oeuvre d'autres processus de soudage pratiques (36) tel que dans l'étape 5, est faite, lorsque le résultat de mesure n'est pas plus de 3% inférieur au résultat de mesure du premier contrôle (22).

11. Procédé selon la revendication 6, **caractérisé par le fait que** dans l'étape a.) une mise en oeuvre d'autres processus de soudage pratiques (36), tel que dans l'étape 5, est faite, lorsque le résultat de mesure n'est pas plus de 5% inférieur au résultat de mesure du premier contrôle (22).

12. Procédé selon la revendication 6, **caractérisé par le fait que** dans l'étape a.) une mise en oeuvre d'autres processus de soudage pratiques (36), tel que dans l'étape 5, est faite, lorsque le résultat de mesure n'est pas plus de 3% inférieur au résultat de mesure du premier contrôle (22).
